Europäisches Patentamt

European Patent Office

Office européen des brevets

(19)

(11) Publication number: 0 339 895
A1

(12) EUROPEAN PATENT APPLICATION

(21) Application number: 89304031.1

(22) Date of filing: 24.04.89

(51) Int. Cl.⁴: C09K 11/88 , C09K 11/84

(30) Priority: 29.04.88 US 187932

(43) Date of publication of application:
02.11.89 Bulletin 89/44

(84) Designated Contracting States:
DE FR GB IT

(71) Applicant: SUNSTONE, INC.
Route 130 Suite C.
Dayton, New Jersey 08810(US)

(72) Inventor: Soled, Stuart L.
R.D. 1, Box 117
Pittstown New Jersey 08867(US)
Inventor: Tellefsen, Mark
4 Greenwood Drive
Freehold New Jersey 07728(US)

(74) Representative: Beresford, Keith Denis Lewis
et al
BERESFORD & Co. 2-5 Warwick Court High
Holborn
London WC1R 5DJ(GB)

(54) Red and red-orange afterglow phosphors.

(57) Red and red-orange afterglow phosphors and methods for manufacturing such phosphors are provided. The red and red-orange afterglow phosphors are comprised of an alkaline earth chalcogenide host and an activator comprised of both europium and thulium, or europium and thulium containing compounds or compositions. The phosphors are prepared in the presence of a suitable amount of a flux.

EP 0 339 895 A1

# RED AND RED-ORANGE AFTERGLOW PHOSPHORS

## Field of the Invention

The present invention relates to afterglow phosphors (i.e., phosphorescent materials) and to methods for manufacturing afterglow phosphors. More particularly, the present invention relates to bright red and red-orange afterglow phosphors suitable for a variety of purposes, and to methods for making these highly desirable phosphors.

## Background of the Invention

A number of materials release energy in the form of electromagnetic radiation, e.g., visible light, upon being excited with an energy source, e.g., ultraviolet radiation. Some of these materials release energy immediately upon being excited with an energy source. These materials are sometimes called fluorescent. Others of these materials store at least some energy for release at a later time. These materials can be broken into two categories: ones that release stored energy only after being excited with another energy source, such as infrared radiation, which is generally of lower energy (longer wavelengths) than the emission. These materials are sometimes called infrared stimulable. And other materials which have the ability to store the excitation energy and release the energy gradually over an extended period without the need for external stimulation. These materials are called phosphorescent. Phosphorescent materials can store excitation energy received in the form of visible light, ultraviolet light, etc., and gradually release that energy in the form, e.g., of visible light. Typically, phosphorescent materials (sometimes called "afterglow phosphors") can absorb energy such as room light and release the stored energy thereafter, i.e., after the room has been darkened, to provide an attractive and useful glow, termed "afterglow," which enables the material to be seen even after the room is dark. The brightness of the afterglow of such phosphors gradually diminishes as the stored energy is released.

Several afterglow phosphors are known in the art. Examples of these phosphors are described in Kirk-Othmer's Encyclopedia of Chemical Technology, 1st Edition, Vol. 8, 550-552. Known phosphors include several zinc sulfide materials, such as the commercially available material sold under the name "Lumilux", distributed by the company Riedel-de Haën. It is believed that these materials contain a zinc sulfide host activated with copper. Phosphorescent materials containing alkaline earth sulfide host materials have also been reported. Strontium sulfide and calcium sulfide hosts are reported in the Handbook of Physics, Vol. 26, Springer-Verlag, Berlin, 1958, p. 39 and in the book "Luminescence in Crystals," D. Curie, 1963, Methuen & Co., London. These materials are reported to have blue or green afterglows. Pawar et al. (J. Lumin; Vol. 16, p. 29-34 (1978)) measured thermal glow curves on calcium sulfide phosphors activated with bismuth and thulium.

Certain alkaline earth sulfides or selenide phosphors activated with rare earth ions have also been described as producing an emission upon stimulation with infrared radiation. Ward (J. Electrochem Soc. 93-(5), .171-6, (1948)), Stripp and Ward (J.A.C.S. 70 401-406, (1948)), Texin et al. (J.A.C.S. 71, 2494 (1949)); Urbach et al. (J. Opt. Sci., Amer., 36(7), 372-381 (1946)) and Leverenz, U.S. Patent 2,527,365, describe europium and samarium activated strontium selenide, strontium sulfide and calcium selenide as materials which release stored energy upon receiving an infrared stimulus. Smith et al. (J.A.C.S. 69, 1725-1729 (1947)) list europium and lead, and europium and bismuth, as activator combinations that produce phosphorescence. Keller, U.S. Patent 2,979,467, describes infrared stimulated materials having europium and thulium activators.

None of these authors describe phosphors which can produce a bright red or red-orange afterglow. Nor do any of these authors disclose compositions which can produce bright red or red-orange afterglows without the need for additives or additional stimulation, such as infrared radiation. To the contrary, the phosphors primarily in use today have been limited to those having a green or shades of green afterglow. It has been suggested to make phosphors which are normally green, glow in the red or red-orange region by adding additives such as organic dyes or substituting cadmium for zinc in a zinc sulfide host. In essence these additives "shift" the luminance of the phosphor from green to red or red-orange visible light. However, materials containing cadmium sulfide are toxic which can seriously detract from the use of such materials in many applications, for example, children's toys. Moreover, shifting the spectrum from green to red or red-orange with organic fluorescent dyes does not provide phosphors of effective brightness.

The fact that green phosphors are primarily available might at first be considered surprising. Actually it is quite understandable. It is much simpler to provide phosphors having a green afterglow, rather than red or red-orange. As described in "Optics", F.W. Sears, Addison-Wesley, 1958, Chapter 13, pages 322, et seq. the spectra in the electromagnetic radiation corresponding to visible green is 3-10 times greater in luminance than spectra emanating in visible red or red-orange for the same level of radiant flux. Consequently, in order to emit red or red-orange afterglow, red or red-orange phosphors would have to be three to ten times more radiant than phosphors having green afterglow in order to provide the same visible brightness. One skilled in the art knows that there are enormous difficulties in providing phosphors of such brightness, particularly in the red and red-orange region.

Notwithstanding these difficulties, it would be highly desirable to provide afterglow phosphors which possess bright red or red-orange afterglow. Such afterglow phosphors could be used, among other places, in traffic signs, in darkened movie theatres or in other dark areas, to provide visual safety indications. It would be appreciated that bright red or red-orange visual indications would be particularly effective and desirable in getting the average viewers attention, as opposed, e.g., to green. Advantageously, such bright red or red-orange phosphors can be used in combination with green phosphors to provide attractive striped patterns, again providing increased likelihood of attracting attention.

It would also be highly desirable to provide red or red-orange phosphors from materials which do not present serious toxicity problems so that the phosphors can be used and made without serious difficulty in, e.g., waste disposal.

It would also be highly desirable to provide an efficient and effective process for making red and red-orange phosphors.

Objects of the Invention

Accordingly, it is an object of the present invention to provide bright red and red-orange afterglow phosphors.

It is another object of the invention to provide articles of manufacture having bright red and red-orange afterglow characteristics.

It is still another object of the invention to provide articles of manufacture having green and red or red-orange afterglow characteristics, in the form, e.g., of green and red or red-orange stripes.

It is another object of the invention to provide compositions having bright yellow afterglow characteristics by mixing green afterglows with the red or red-orange afterglow phosphors.

It is another object of the invention to provide a process for making bright red or red-orange afterglow phosphors.

These and other objects will become apparent from the following summary of the invention and description.

Summary of the Invention

Broadly contemplated, the present invention provides phosphors having bright red or red-orange afterglow characteristics. The phosphors are comprised of an alkaline earth chalcogenide host and an activator comprised of europium and thulium, or europium and thulium containing compounds or compositions. The phosphors are prepared in the presence of a suitable amount of a flux. The phosphor products can contain the flux in the form of residue or otherwise.

The alkaline earth chalcogenide host can be described by the formula M:X wherein M is selected from the group consisting of magnesium, calcium, strontium, barium and mixtures thereof, and X is selected from the group consisting of sulfur, selenium and mixtures thereof. One preferred host material for use in the invention is calcium sulfide which, along with the selected activators and flux, provides phosphors having a bright red afterglow.

The activators for use in the invention are comprised of both europium and thulium, and/or europium and thulium containing compounds or compositions. These activators can be present in the reaction mixtures as oxides, sulfates, carbonates, nitrates, halides or mixtures thereof.

The flux can comprise an alkali, alkaline earth, or ammonium form of a halide, sulfate, carbonate, or phosphate or mixtures thereof. More preferably the flux can be selected from the group consisting of calcium fluoride, strontium sulfate, lithium fluoride, ammonium fluoride, calcium sulfate and mixtures thereof. The phosphor reaction mixtures ("mix") of the invention are comprised of the host; from about 2 to about 50 percent by weight flux, based on the weight of the host; and several hundred to about several thousand parts per million of thulium and europium, based on the number of moles of the host. The amount of thulium and europium can be described in atom percent. Preferably the afterglow phosphors of the invention contain europium in an amount of about 200 parts per million, about 0.020 atom percent (0.020 a/o), based on the moles of the host, and thulium is present in an amount of about 170 parts per million, about 0.017 atom percent (0.017 a/o), based on the moles of the host.

Broadly contemplated, the invention also comprises a method for making bright red or red-orange afterglow phosphors which comprises:

introducing a mixture comprised of an alkaline earth chalcogenide host, europium and thulium containing activators, and a flux into a heating chamber such as a furnace;

purging the heating chamber with an inert gas to remove contaminent oxygen;

heating said mixture to a selected temperature above the melting point of the flux; and

maintaining said mixture at the selected temperature for a pre-determined period to form a phosphor; and cooling said phosphor.

In more specific aspects of the method, the host of the invention can be represented by the formula M:X wherein M is selected from the group consisting of magnesium, calcium, strontium, barium, and mixtures thereof, and X is selected from the group consisting of sulfur, selenium and mixtures thereof. In another specific aspect of the method of the invention, europium and thulium are added as oxides, sulfates, carbonates, nitrates, halides or mixtures thereof. Still more specifically, the reaction mixture of the invention can be heated in refractory containers which are placed in the heating chambers along with an oxygen scavenger material. The refractory containers can be provided with a loose fitting cap. The heating chamber can first be purged of oxygen, such as with inert gas or the mix can be placed in the vicinity of a scavenger material. The mixture is heated to high temperatures of about 800 to 1200° C, preferably between 900 to 1050° C. The mixture is heated at a rate of between about 2-100 degrees per minute, preferably about 5 degrees per minute and the mixture is maintained at the elevated temperature for from about 15 minutes to several hours depending, e.g., on the weight and volume of the mixture.

In still another specific aspect of the invention the red or red-orange afterglow phosphors are provided as films or powders on substrates to form articles of manufacture having bright red or red-orange afterglow characteristics.

In a still further aspect of the invention the red or red-orange afterglow phosphors are provided in plastics, such as methyl methacrylate, to provide plastic objects having bright red or red-orange afterglow characteristics.

In still another aspect of the invention the red or red-orange afterglow phosphors are combined with phosphors originally having green afterglow characteristics, to provide phosphors of other colors, such as yellow.

## Detailed Description of the Invention

The phosphors of the invention are comprised of an alkaline earth chalcogenide and europium and thulium, or europium and thulium containing compounds or compositions. The phosphors are prepared in the presence of a suitable amount of a selected flux.

The alkaline earth chalcogenide host can be represented by the formula comprising M:X wherein M is selected from the group consisting of magnesium, calcium, strontium, barium and mixtures thereof, and X is selected from the group consisting of sulfur, selenium and mixtures thereof. More preferably the host can be selected from the group consisting of calcium sulfide, strontium sulfide and mixtures thereof. In addition, the host can comprise solid solutions of the alkaline earth chalcogenides, such as solid solutions of calcium sulfide and strontium sulfide. Calcium sulfide is a particularly preferred host because it provides a bright red afterglow phosphor when combined with the europium and thulium activators and flux.

The activators are comprised of europium and thulium, or europium and thulium containing compounds or compositions. These activators are introduced into the reaction mixture as oxides, sulfates, carbonates, nitrates, halides or mixtures thereof. Preferably, the europium portion of the activator is introduced as europium sulfate or europium oxide and the thulium portion of the activator is introduced as thulium sulfate or thulium oxide. The proportion of europium and thulium activators can be varied over a wide range,

4

provided that enough of both europium and thulium are present in the phosphor product. Typically, the molar ratio of europium to thulium, or europium compounds or compositions, to thulium compounds or compositions introduced into the reaction mixture can be from about 2:1 to about 1:100 which results in a molar ratio of europium to thulium in the phosphor product of from about 2:1 to about 1:100. The total amount of the europium and thulium added in the reaction mixture to form the phosphor product is very small and is typically described in atom percent relative to the amount of the host added. The amount of europium and thulium is usually several hundred to several thousand parts per million based on the number of moles of the host. Preferably, the amount of europium activator is about 200 parts per million, approximately 0.020 atom percent (0.020 a/o), and the amount of thulium is about 170 parts per million, approximately 0.017 atom percent (0.017 a/o), based on the amount of the host.

The flux can be comprised of an alkali, alkaline earth, or ammonium form of a halide, sulfate, carbonate, phosphate or mixtures thereof. More preferably, the flux can be selected from the group consisting of calcium fluoride, strontium sulfate, lithium fluoride, ammonium fluoride, calcium sulfate and mixtures thereof. Calcium fluoride and strontium sulfate are two particularly preferred flux materials. The amount of flux needed will vary depending on the particular hosts and activators added to the reaction mixture. Typically the amount of flux will comprise from about 5 to about 50 percent of the reaction mixture, based on the weight of the host. More preferably the flux will comprise from about 5 to 30 percent by weight of the reaction mixture based on the weight of the host. The only requirement for the amount of flux added is that enough flux is present to insure incorporation of the activators into the host and provide proper crystallization of the phosphor.

Without intending to be limited by theory, it is believed that the phosphors of the invention are generally comprised of a crystalline matrix of materials provided by the reaction mixture, e.g., sulfur, selenium and alkaline earth metals, such as calcium, strontium, barium, magnesium, and combinations thereof, and the europium and thulium activators. The flux, or components thereof, can also be present as residue or otherwise.

The afterglow phosphors of the invention emit light between about 600 and 700 nanometers (nm), typically between 620 and 650 nm, which corresponds to visible light in the red-orange and deep red region of the spectra. The phosphors of the invention can be energized (commonly referred to as "charging") by, e.g., being exposed to light exhibiting radiation in the region 400 to 550 nm, typically 425 to 525 nm. Examples of such light include daylight, indoor light, fluorescent light or other commonly available light sources such as flashlights, automobile headlamps and the like.

The phosphors of the invention are prepared by thoroughly mixing the host material with the activators and flux components. The mixture is placed in a refractory container, such as a crucible (preferably an alpha-alumina crucible at the laboratory scale level), after the reaction mixture has been thoroughly mixed. The refractory container is placed in a heating chamber, such as a furnace, on, for example, a tray. The heating chamber can be purged of oxygen prior to heating to avoid excessive oxidation which can destroy the phosphor. Suitable purging gases include inert gases such as nitrogen, helium or argon. The amount of inert gas introduced into the heating chamber will vary depending primarily on whether enough gas is introduced into the chamber to remove oxygen which may unduly contaminate the reaction materials and products. Typically for about each one volume in the heating chamber, about 10 to 20 volumes of inert gas are introduced into the chamber, during the heating cycle, elevated temperature period and cooling period. Higher or lower purge gas volumes are also contemplated provided they do not deleteriously affect phosphor properties.

In addition to providing purge gas to remove oxygen, other methods are contemplated. For example, an oxygen scavenger such as carbon can be introduced into the heating chamber. Typically, the oxygen scavenger can be placed in a separate refractory container into which the crucible with the phosphor mix is placed to avoid contaminating the reactants. Alternatively, the oxygen scavenger can be added in addition to the purge gas to reduce the amount of purge gas needed and provide greater efficiency. The oxygen scavenger can decrease the time required for reacting the reaction materials and improve the throughput.

Many arrangements can apply to the refractory container arrangements in the heating chamber, especially in large scale productions. At the laboratory scale, it is desired to maintain the refractory container on a tray in the heating chamber (tube furnace) and to maintain the entire tray and refractory container (crucible) at approximately the same temperature. The refractory container can be left open in the heating chamber or a loose fitting cover can be applied over the reaction mixture. In laboratory production it has been found desirable to apply a loose fitting cover onto the crucible.

The heating chamber is heated from room temperature to a selected temperature of from about 800 to about 1200° C. It is desired to heat the reaction mixture to slightly above the melting temperature of the flux, but below the melting temperatures of the host and activators. The selected temperature for heating is preferably between about 900 and about 1050°C. The reaction mixture is preferably raised slowly. Typically, the temperature of the heating chamber can be raised at the rate of about 2°C to about 100°C per minute, preferably about 5°C per minute. After heating the reaction mixture to a selected predetermined temperature, the heating chamber is maintained at the elevated temperature for a selected predetermined period until the reaction product is formed and the crystals are permitted to grow. This is typically referred to as the "dwell time." The dwell time can be from about 0.5 to about 3 hours, although other time periods are contemplated depending, e.g., upon the reaction components or the quantities of materials used. Preferably, in laboratory scale preparations and with the preferred components, the reaction mixture is maintained at the elevated temperature in the purged furnace for a dwell time of about 1 hour. During the period of gradual increasing temperature in the heating chamber, and during the period of maintained elevated temperature (dwell time), the chamber can be exposed to purge gas at a rate of about one volume of purge gas to one chamber volume, to continue to prevent oxidation.

After the materials are heated at the rates indicated, and maintained at the elevated temperature for the selected period until the reaction product is crystallized, the reaction mixture (now a product) is gradually cooled to room temperature over an extended period. The time for such graduated cooling will depend on the type of materials used, the size of the heating chamber and other variables which will be apparent to those skilled in the art. Preferably, for laboratory scale productions, the materials can be cooled over a period of about 4 to 12 hours. During this cooling period the phosphors can continue to be purged with inert gas at the ratio of about one to 10 volumes of purge gas to one chamber volume to remove contaminent oxygen.

Besides adding the host materials directly, they can be added in situ. For example, alkaline earth oxides, carbonates, hydroxides or oxalates can be added and converted to the sulfides upon reaction with hydrogen sulfide or carbon disulfide at elevated temperature. Alternately, sulfurizing fluxes, comprised, e.g., of sulfur and an alkali metal carbonate or thiosulfate can be added to the reaction mix containing the alkaline earth oxides, carbonates, hydroxides or oxalates, and activators, and reacted at the elevated temperature in an inert atmosphere to produce phosphors with the alkaline earth sulfide hosts.

Without wishing to be limited by theory, it is believed that the foregoing heating and cooling operation provides the means for the orderly growth of a crystalline matrix comprised of the host material and which incorporate the activators, i.e., both europium and thulium, into the crystalline matrix, in a manner which permits these materials to both store excitation energy in the matrix and to release such energy gradually in the form of a bright red or red-orange afterglow. The flux, or components thereof, may also be present as residue, or otherwise. It is not known whether the flux, or components thereof, are incorporated in the crystal lattice are entrapped therein or are otherwise present. The invention herein is not limited to any specific location of the flux components in the phosphor product and indeed incorporates any such alternatives.

The finished phosphor, now at room temperature, is typically in the form of a sintered product. At laboratory scale productions, this is called a sintered boule. The sintered product can be ground into fine particles. Occasionally, it is desired to reheat the fine particles to remove thermal stresses or dislocations which may be present therein (annealing). This can be done by reheating to a temperature lower than the highest elevated temperature, for example, about 600 to 925°C, preferably 750 to 875°C so that dislocations which may be present in the crystal structure can be relieved.

The annealed product can then be dispersed into a fine powder of desired particle size. These fine powders can then be used to form bright red or red-orange afterglow products. For example, by dispersing the fine powder in a solvent or resin the fine products can be used to form thick films. Alternatively, the fines can be incorporated into a plastic, such as methyl methacrylate, and/or in substrates to form plastic products having afterglow characteristics.

The fine powders can also be mixed with other phosphors, such as the commonly available green phosphors, to form phosphor combinations of varying colors depending on the relative proportion of the phosphors used. Said mixtures can be used to form, for example, heretofore unknown yellow afterglow phosphors without the use of additional additives such as organic fluorescent dyes.

In addition, the phosphors of the invention can be applied to substrates separately from other phosphors so that decorative afterglow patterns can be formed, for example, signs having green and red alternating stripes. In fact, the afterglow phosphors of the invention can be used in all applications where a red or red-orange afterglow would be considered useful. Without wishing to be limited to any specific applications, it is contemplated that these phosphors can be used in safety devices, in vehicle traffic situations such as on traffic signs, road machinery, in paints, wallpapers, reflectors, photographic applications, on containers, shoes, hunting equipment, in paper goods, and in many more applications which can advantageously enjoy the benefit of red or red-orange afterglow. One advantage of these phosphors over the commercially available green afterglow materials is that the red or red-orange afterglows will better signify danger compared to green. And, since the red and red-orange afterglow phosphors of the invention have such strong radiance they compare favorably in brightness with the traditionally available green, even though the human eye is more sensitive to green.

This invention will be more readily understood by reference to the examples below.

Example 1

In this Example the activators are varied using the same host and flux.

Three phosphors were prepared. Each contained 3.0 grams of CaS host together with 0.27 gm $CaF_2$ and 0.27 gm $SrSO_4$ flux. In addition, phosphor A contained 0.0030 gm $Eu_2(SO_4)_3.8H_2O$ (0.020 atomic percent [a/o] Eu), phosphor B contained 0.0027 gm $Tm_2(SO_4)_3.8H_2O$ (0.017 [a/o]Tm) and phosphor C contained both 0.0030 gm $Eu_2(SO_4)_3.8H_2O$ and 0.0027 gm $Tm_2(SO_4)_3 8H_2O$. In each phosphor the components were ground together, placed into 10cc alumina crucibles with loose fitting lids and placed into a 3 inch diameter alumina furnace tube 48 inches long. The furnace is thoroughly purged with He, flowing at 1.5 liters per minute for 60 minutes, and then the He flow is adjusted to 90 cc/min. The firing cycle includes heating at an average rate of about 5 degrees per minute to a 960°C exposure temperature and cooling at about 10 deg/min to about room temperature, the helium flow continuing until the end of the cooling cycle. The sintered masses were removed from the crucibles and examined. Phosphors A and C had a pink body color, whereas phosphor B was white. The phosphors were illuminated with fluorescent room light which was then turned off. Phosphors A and B did not show any afterglow. Phosphor C had a bright red long lasting afterglow.

As the example shows, only when both europium and thulium are added to the same host and flux does a bright red long lasting afterglow occur.

Example 2

The same procedures for preparing phosphors as described in Example 1 were followed herein, except that a strontium sulfide host was used. Three phosphors were prepared. Each contained 3.0 grams of SrS, 0.27 gm $CaF_2$ and 0.27 gm $SrSO_4$. In addition phosphor A contained 0.0019 gm $Eu_2(SO_4)_3.8H_2O$ [0.020 a/o Eu], phosphor B contained 0.0016 gm $Tm_2(SO_4)_3.8H_2O$ [0.017 a/o Tm] and phosphor C contained 0.0019 gm $Eu_2(SO_4)_3.8H_2O$ and 0.0016 gm $Tm_2 (SO_4)_3.8H_2O$. The phosphors were subjected to the same heating procedure as disclosed in Example 1. Phosphors A and C had pale orange body colors, whereas phosphor B was white. All three phosphors were placed in a room illuminated with fluorescent lights. When the roomlights were shut, phosphor A had a very dim barely discernible orange afterglow, phosphor B had no afterglow and phosphor C had an extremely bright long lasting red-orange afterglow.

The example shows, inter alia, that when the host is changed from calcium sulfide to strontium sulfide a red-orange, rather than red, afterglow occurs. This example also shows that only when both europium and thulium activators are added does the bright red-orange afterglow occur.

Example 3

In this Example a variety of different fluxes are used with the same calcium sulfide host and activator materials.

40.0 grams of CaS was mixed with 0.040gm of $Eu_2(SO_4)_3.8H_2O$ (0.020[a/o]Eu) and 0.036gm $Tm_2(SO_4)_3.8H_2O$ (0.017[a/o]Tm). 3.0 grams of this mix was weighed out and to these samples different fluxes were added. The samples were heated as described in Example 1. Table 1 lists these fluxes and ranks the phosphorescence that results with the phosphors prepared from each of these fluxes.

TABLE 1

| FLUX | PHOSPHORESCENCE |
|---|---|
| $0.27gm\ CaF_2\ +\ 0.27gm\ SrSO_4$ | s |
| $0.54gm\ Na_2SO_4$ | i |
| $0.54gm\ LiF$ | vw |
| $0.54gm\ Li_2SO_4$ | i |
| $0.54\ CaSO_4$ | w |
| $0.27gm\ CaF_2\ +\ 0.27CaSO_4$ | m |
| $0.27gm\ CaF_2$ | s |

TABLE 1 (cont'd)

| FLUX | PHOSPHORESCENCE |
|---|---|
| $0.54gm\ KCl$ | vw |
| $0.54gm\ KBr$ | w |
| $0.54gm\ NH_4I$ | w |
| $0.54\ NH_4F$ | s |
| Legend: | |
| s-strong | |
| m-medium | |
| w-weak | |
| vw-very weak | |
| i-inactive | |

Consequently, $CaF_2$, $CaF_2/SrSO_4$ mixture and $NH_4F$ provide excellent fluxes.

As this Example shows, a variety of different fluxes can be used which still provide excellent red afterglow phosphors, provided the described host and activators are used.

Example 4

In this Example a variety of different fluxes are used with the same strontium sulfide host and activator materials.

40.0 grams of SrS were mixed with 0.0121 gm $Eu_2O_3$ (0.02 a/o Eu) and 0.0107 gm $Tm_2O_3$ (0.017 a/o Tm). 3.0 gram quantities of this mix were weighed and to these samples different fluxes were added. The samples were heated as described in Example 1. Table 1a lists these fluxes and ranks the phosphorescence that results with the phosphors prepared from each of the fluxes.

TABLE 1a

| FLUX | PHOSPHORESCENC E |
|---|---|
| 0.27gm $CaF_2$ + 0.27gm $SrSO_4$ | s |
| 0.54gm $Na_2SO_4$ | w |
| 0.54gm LiF | s |
| 0.54gm $CaSO_4$ | m |
| 0.27gm $CaF_2$ + 0.27gm $CaSO_4$ | s |
| 0.27gm $CaF_2$ | s |
| 0.27gm $SrF_2$ | m |
| 0.54gm KCl | m |
| 0.54gm KBr | w |
| 0.54gm $NH_4I$ | m |
| 0.54gm $NH_4F$ | s |
| 0.54gm NaCl | m |
| 0.54gm NaF | i |
| Legend: | |
| s-strong | |
| m-medium | |
| w-weak | |
| i-inactive | |

As this Example shows a variety of different fluxes can be used which still provide excellent red-orange phosphors, provided the described host and activators are used.

Example 5

3.0 gram samples of the CaS, europium sulfate and thulium sulfate mixtures as described in Example 3 were taken. To each sample was added 0.27gm $CaF_2$ and 0.27gm $SrSO_4$ and different levels of SrS. Phosphors were prepared as described in Example 1 and the levels of SrS are shown in Table 2.

TABLE 2

| PHOSPHOR | ADDED SrS |
|---|---|
| A | 0 g |
| B | 0.15 g |
| C | 0.31 g |
| D | 0.68 g |

Phosphors A, B, C, and D all showed long afterglow red emissions. The addition of low levels of SrS slightly increases the duration of the afterglow.

Example 6

Four phosphors were prepared as described in Example 1. All contained 3.0 gm CaS, 0.27gm $CaF_2$, and 0.27gm $SrSO_4$. The concentration of the europium and thulium activators were varied as set out in Table 3.

TABLE 3

| PHOSPHOR | $Eu_2(SO_4)_3.8H_2O$ (wt) | $Eu_2(SO_4)_3.8H_2O$ (Eu atom %) | $Tm_2(SO_4)_3.8H_2O$ (wt) | $Tm_2(SO_4)_3.8H_2O$ (Tm atom %) | PHOSPHORESCENCE |
|---|---|---|---|---|---|
| A | 0.0030gm | 0.020 a/o Eu | 0.0027gm | 0.017 a/o Tm | s |
| B | 0.030gm | 0.20 a/o Eu | 0.0027gm | 0.017 a/o Tm | vw |
| C | 0.0030gm | 0.020 a/o Eu | 0.027gm | 0.17 a/o Tm | vs |
| D | 0.030gm | 0.20 a/o Eu | 0.027gm | 0.17 a/o Tm | m |

Legend:

s-strong

vw-very weak

vs-very strong

m-medium

EP 0 339 895 A1

Phosphor B, which has a europium content 10 times larger than phosphor A, shows a weak, short afterglow. Phosphor C with a higher Tm content than A (by 10) has a slightly longer afterglow. Phosphor D, which contains a higher concentration of both Eu and Tm (by 10) than A is not as bright nor lasts as long as A or C, but is much superior to phosphor B.

As this Example shows, strong phosphorescence is obtained when the europium and thulium are present in about equal amounts or the thulium concentration exceeds the europuim concentration.

## EXAMPLE 7

Four phosphors were prepared as described in Example 2. All contained 3.0gm SrS, 0.27gm $CaF_2$ and 0.27 gm $SrSO_4$. The concentration of the europium and thulium activators were varied as indicated in Table 3a.

Table 3a

| PHOSPHOR | $Eu_2(SO_4)_3.8H_2O$ | $Tm_2(SO_4)_3.8H_2O$ | PHOSPHORESCENCE |
|---|---|---|---|
| A | 0.0019gm(0.020 a/o Eu) | 0.0016 (0.017 a/o Tm) | s |
| B | 0.019gm (0.20 a/o Eu) | 0.0016 (0.017 a/o Tm) | m |
| C | 0.0019gm (0.020 a/o Eu) | 0.016 (0.17 a/o Tm) | vs |
| D | 0.019gm (0.20 a/o Eu) | 0.016 (0.17 a/o Tm) | m |
| Legend: | | | |
| vs: very strong<br>s : strong<br>m : medium | | | |

Phosphor B, which has a europium content 10 times larger than A shows an afterglow of somewhat less duration and brightness. Phosphor C, which has a higher Tm content than A (by factor of 10) shows a slightly longer afterglow. Phosphor D, which has both a higher Eu and Tm content (each by 10) than A is not as bright nor lasts as long as A or C, but compares to phosphor B. This example shows the longest afterglow in the red-orange phosphors occurs when the thulium level equals or exceeds that of europium.

## EXAMPLE 8

Nine phosphors were prepared. Each contained 0.0030gm $Eu_2(SO_4)_3.8H_2O$ and 0.0027gm $Tm_2(SO_4)_3.8H_2O$ activators. The level of CaS host, $CaF_2$ and $SrSO_4$ fluxes is shown in Table 4. The phosphors were prepared according to Example 1. The results are indicated below

EP 0 339 895 A1

Table 4

| (weights in grams) | | | | |
|---|---|---|---|---|
| PHOSPHOR | CaS | CaF$_2$ | SrSO$_4$ | PHOSPHORESCENCE |
| A | 3.0 | 0.03 | 0.03 | w |
| B | 3.0 | 0.13 | 0.13 | s |
| C | 3.0 | 0.27 | 0.27 | s |
| D | 3.0 | 0.54 | 0.54 | s |
| E | 3.0 | 1.08 | 1.08 | s |
| F | 3.0 | 2.16 | 2.16 | s |
| G | 3.0 | 4.32 | 4.32 | m |
| H | 0.50 | 4.32 | 4.32 | m |
| I | 0 | 4.32 | 4.32 | i |
| Legend: | | | | |
| i inactive | | | | |
| w weak | | | | |
| m medium | | | | |
| s strong | | | | |

## EXAMPLE 9

Seven phosphors were prepared. Each contained 3.0 gm SrS, 0.0019gm Eu$_2$(SO$_4$)$_3$.8H$_2$O and 0.0016 gm Tm$_2$(SO$_4$)$_3$.8H$_2$O. The CaF$_2$ and SrSO$_4$ were added at different levels and the phosphors prepared according to Example 1. Table 4a lists the flux contents and afterglow behavior.

Table 4a

| (weights in grams) | | | |
|---|---|---|---|
| PHOSPHOR | CaF$_2$ | SrSO$_4$ | PHOSPHORESCENCE |
| A | 0.03 | 0.03 | m |
| B | 0.13 | 0.13 | s |
| C | 0.27 | 0.27 | s |
| D | 0.54 | 0.54 | s |
| E | 1.08 | 1.08 | m |
| F | 2.16 | 2.16 | m |
| G | 4.32 | 4.32 | m |
| Legend: | | | |
| m: medium | | | |
| s: strong | | | |

## EXAMPLE 10

Mixtures of SrS with SrSe were used along with CaF$_2$, SrSO$_4$, Eu$_2$(SO$_4$)$_3$.8H$_2$O and Tm$_2$(SO$_4$)$_3$.8H$_2$O to prepare sulfuselenide phosphors. Table 5 lists the mixtures used in grams.

12

TABLE 5

| | PHOSPHOR | HOST FORMULA | SrS | SrSe | CaF$_2$ | SrSO$_4$ | Eu(SO$_4$)$_3$.8H$_2$O | Tm$_2$(SO$_4$)$_3$.8H$_2$O |
|---|---|---|---|---|---|---|---|---|
| | A | SrS$_{.95}$Se$_{.05}$ | 6.52 | 0.48 | 0.63 | 0.63 | 0.0043 | 0.0036 |
| | B | SrS$_{.85}$Se$_{.15}$ | 5.62 | 1.38 | 0.63 | 0.63 | 0.0041 | 0.0035 |
| | C | SrS$_{.70}$Se$_{.30}$ | 4.38 | 2.62 | 0.63 | 0.63 | 0.0038 | 0.0030 |
| | D | SrS$_{.37}$Se$_{.63}$ | 2.08 | 4.92 | 0.63 | 0.63 | 0.0034 | 0.0036 |
| | E | SrS$_{.05}$Se$_{.95}$ | 0.26 | 6.74 | 0.63 | 0.63 | 0.0032 | 0.0027 |

The samples were heated as described in Example 1. Phosphors A and B showed strong orange red afterglow. Sample E had a weak phosphorescence but was strongly stimulated by infrared radiation of one micron. Samples C and D had moderate levels of both phosphorescence and infrared stimulability at one micron.

EXAMPLE 11

The C phosphor of Example 2 (SrS:Eu,Tm) was placed in a PTI Deltascan Photometer and allowed to remain in a dark chamber 6 hours to deplete its phosphorescence. The sample was then illuminated with a strong IR beam of 10mw/cm$^2$ scanned between 800 and 2000nm. The emission wavelength was set to 620nm. Throughout the scanned IR range, no visible emissions were observed. The sample was placed in front of a Amoco Nd/YAG laser and IR radiation of 1.064u with an intense power of 70 watts/cm$^2$ was focused on a small area 0.3mm$^2$. A weak visible emission was observed. This was compared to phosphor A as prepared in Example 2, containing no Tm, only Eu. It showed a similar level of emission in front of the laser. The Eu, Tm phosphor therefore has a very weak infrared stimulability comparable to one with Eu only. A phosphor similar to that of C of Example 2 was prepared only that 0.0016g of Sm$_2$(SO$_4$)$_3$.8H$_2$O was substituted for the 0.0016gm of Tm$_2$(SO$_4$)$_3$.8H$_2$O. This produces an IR stimulable phosphor similar to those known in the art. Under the same stimulation conditions in the spectrophotometer, the sample emitted sufficient visible light at 620nm to saturate the detector (1.6 x 10$^6$ counts/sec). Placed in front of the Amoco laser on intense red orange visible emission is observed. This phosphor shows a very weak phosphorescence and a strong IR stimulation.

EXAMPLE 12

A phosphor containing both CaS and SrS with Eu, Tm activators was prepared. 4.06gm SrS, 2.44 gm CaS, 0.59gm CaF$_2$, 0.59gm SrSO$_4$, 0.0050gm Eu$_2$(SO$_4$)$_3$.8H$_2$O and 0.0043gm Tm$_2$(SO$_4$)$_3$.8H$_2$O were mixed and reacted as described in Example 1. The resulting phosphor which can be represented as Sr$_{.5}$Ca$_{.5}$S:Eu,Tm, had a long afterglow phosphorescence that was intermediate in emission color between the pure CaS and SrS hosts.

EXAMPLE 13

Phosphors C of Example 1 and 2 were placed in the PTI spectrophotometer.
The samples are excited by monochromatic bluelight (470nm) with a power of 200 microwatts/cm$^2$. The emissions of the phosphors were determined. The SrS: Eu,Tm phosphor (Example 2, phosphor C) emits at 620nm (red-orange) whereas the CaS: Eu,Tm phosphor (Example 1, phosphor C) emits at 650nm (red). When the excitation light is removed, the emission at these two wavelengths was monitored as a function of time. After 5 minutes in the dark chamber, visible emission could still be detected.

EXAMPLE 14

The mix of Example 2, phosphor C was prepared and placed into a 10cc alumina crucible with a loose fitting cap. This crucible was placed in a 50cc porcelain crucible that had 3 grams of carbon on the bottom.

A loose fitting cap was placed on this crucible. This arrangement was placed into a muffle furnace at 960° C with no special purging (i.e. containing air). The furnace was held at 960° C for one hour. The sample was then removed from the furnace and quenched to room temperature. The phosphor was removed from the crucible and examined. Its behavior was indistinguishable from the phosphor C of Example 2 that was prepared as according to Example 1 in a strictly inert atmosphere.

EXAMPLE 15

Eu,Tm coactivator phosphors were prepared using BaS and MgS as hosts. Phosphor A had 3.0 gms of BaS mixed with 0.27 gm $CaF_2$, 0.27gm $SrSO_4$, 0.0013gm $Eu_2(SO_4)_3.8H_2O$ and 0.0013gm $Tm_2(SO_4)_3.8H_2O$. Phosphor B was prepared from a mixture of 3.0 gms MgS mixed with 0.27gm $CaF_2$, 0.27gm $SrSO_4$, 0.0040gm $Eu_2(SO_4)_3.8H_2O$ and 0.0034gm $Tm_2(SO_4)3.8H_2O$. The phosphors were mixed and heated as described in Example 1. Phosphor A had a faint yellow phosphorescence and phosphor B a faint red phosphorescence.

EXAMPLE 16

A phosphor prepared as described in Example 2, phosphor C, is thoroughly ground to a fine powder. The phosphorescence, which is mostly destroyed by this treatment can be restored by reheating the sample to 800° for one hour. This phosphor is then passed through a 140 mesh sieve to obtain fine powder, which can be incorporated into a plastic object. 9.5 g of methyl methacrylate monomer liquid is mixed with 8 drops of catalyst (material available from Transene Co. under the tradename Polyclear) and allowed to stand 10 minutes to increase the viscosity. 0.5 grams of the powdered phosphor is added and stirred to achieve a uniform mixture. The mixture is poured into a mold and allowed to cure for 24 hours. The resulting cube, which measures about 20mm on edge, has a uniform pale orange hue. When placed in roomlight which is then shut, the entire cube glows orange.

EXAMPLE 17

One gram of the powder phosphor as described in Example 16 is mixed thoroughly with one gram of a urethane binder (Solubond 1121, Soluol Chemical Co.), the slurry is spread with a metering rod to form a uniform film, which on drying, measures about 7 mil in thickness. The film gives a bright orange afterglow after exposure to roomlight.

EXAMPLE 18

Seven grams of green ZnS:Cu afterglow phosphor (P-1000) obtained from Hanovia is mixed with three grams of the red orange phosphor as described in Example 16. The two phosphors are thoroughly blended. After charging with roomlight, the phosphor is examined in the dark. The eye perceives a yellow afterglow emission from this mixture.

As the foregoing Examples show, in the case of the phosphors prepared from calcium sulfide, europium, thulium and a suitable flux, preferably $CaF_2/SrSO_4$ mixes of equal weight percent, an afterglow phosphor with a red emission (wavelength = 650nm) results. The body color of the phosphor is generally pink. On illumination with daylight, or fluorescent lights, or an automotive headlamp, and removal of the illuminating source creating a dark environment, the phosphor will emit red light for a period exceeding 5 minutes. The intensity of emission decreases with time. The phosphor can be recharged in a manner of seconds with an additional pulse of visible light. The phosphor will then emit red light again. This process can be repeated an unlimited number of times. When placed in a container of $H_2O$, this phosphor functions for over 6 weeks. The phosphor prepared from strontium sulfide, europium and thulium and an appropriate flux such as a $CaF_2/SrSO_4$ equiweight mixture, has a strong red-orange afterglow emission (wavelength = 620nm). The body color of this phosphor is pale orange. On illumination with daylight, fluorescent lights or automotive headlights, this phosphor will then glow a bright red-orange when all sources of illumination are removed to create a dark environment. This phosphor will emit red orange light for more than 5 minutes with the intensity of emission decreasing with time. This phosphor is also easily recharged and can be recycled indefinitely. In contrast to infrared-stimulable phosphors which have weak phosphorescence and glow strongly on exposure of IR radiation of between 800 and 1300nm, the phosphors of this invention have an intense phosphorescence, but show little or no detectable stimulation when exposed to a radiation source tunable between 800-2000nm of 10mwatts/cm$^2$ power. With a laser emitting at 1.064 microns, with a power of 70 watts/cm$^2$ the phosphor emits weakly; the emission being comparable to a sample of SrS:Eu with no added Tm.

One additional feature of the phosphors of the invention is that they are preferably prepared in the absence of impurities, even in parts per million. Such impurities might alter or otherwise detract from the afterglow characteristics of the phosphor, or impart different characteristics such as infrared stimulable activity which may not be desired.

## Claims

1. A red or red-orange afterglow phosphor comprising: an alkaline earth chalcogenide host and europium and thulium activators, said phosphor producing a long lasting red or red-orange afterglow in the range of about 620 to about 550 nm after being charged with visible light in the range of about 400 to about 550 nm without the need for infrared stimulation.

2. The phosphor of Claim 1, wherein the host is represented by the formula comprising M:X wherein M is selected from the group consisting of magnesium, calcium, strontium, barium and mixtures thereof and X is selected from the group consisting of sulfur selenium and mixtures or solid solutions thereof.

3. The phosphor of Claim 1, wherein the host is selected from the group consisting of calcium sulfide, strontium sulfide, strontium selenide, calcium selenide and mixtures or solid solutions thereof (e.g. a solid solution between calcium sulphide and strontium sulphide).

4. The phosphor of Claim 1, wherein the europium and thulium activators are present as oxides, sulfates, carbonates, nitrates, halides or mixtures thereof.

5. The phosphor of any preceding claim, wherein the activator is selected from the group consisting of europium sulfate, europium oxide, thulium sulfate and thulium oxide.

6. The phosphor of any preceding claim, containing a flux selected from the group consisting of an alkali, alkaline earth, or ammonium halide, sulfate, carbonate, phosphate and mixtures thereof as residue or otherwise.

7. The phosphor of Claim 6, wherein the flux is selected from the group consisting of calcium fluoride, strontium sulfate, lithium fluoride, ammonium fluoride, calcium sulfate and mixtures thereof.

8. The phosphor of Claim 6 or 7, wherein the flux is present in the reaction mixture in an amount of from about 2 to about 50 percent by weight, based on the weight of the host.

9. The phosphor of Claim 6 or 7, wherein the flux is present in the reaction mixture in an amount of from about 5 to 30 percent by weight, based on the weight of the host.

10. The phosphor of any preceding claim, wherein the amount of the europium and thulium are each several hundred to about several thousand parts per million based on the moles of host.

11. The phosphor of any preceding claim, wherein said phosphor has an emission between about 620 and about 650 nm.

12. The phosphor of any preceding claim, wherein the molar ratio of the europium to the thulium activators is in the range of from about 2:1 to about 1:100.

13. A red afterglow phosphor comprising: a calcium sulfide host and europium and thulium activators.

14. A red afterglow phosphor prepared from a reaction mixture comprising: calcium sulfide host; europium in an amount of about 200 parts per million (0.020 a/o) based on the moles of host; and thulium in an amount of 170 parts per million (0.017 a/o) based on the moles of host; and calcium fluoride in an amount of about 9 percent by weight based on the weight of the host.

15. A red-orange afterglow phosphor prepared from a reaction mixture comprising: strontium sulfide; europium in an amount of about 200 parts per million (.02 a/o) based on the moles of host and thulium in an amount of about 165 parts per million based on the moles of host; and 9 weight percent calcium fluoride and about 9 weight percent strontium sulfate based on the weight of the host.

16. A method for preparing a red or red-orange afterglow phosphor, said phosphor producing a long lasting red or red-orange afterglow in the range of about 620 to about 650 nm after being charged with visible light in the range of about 400 to about 550 nm without the need for infrared stimulation, comprising: introducing a mixture comprised of an alkaline earth chalcogenide host; europium and thulium activators and a flux, into a heating chamber; purging said heating chamber with an inert gas to remove oxygen; maintaining said mixture at a temperature above the melting point of the flux to form a phosphor: and cooling said phosphor.

17. The method of Claim 16, wherein said mixture is introduced into an alpha-alumina crucible having a loose fitting cap and placed into a heating chamber.

18. The method of Claim 16 or 17, wherein said heating chamber is a tube furnace and wherein said tube furnace is purged with an inert gas selected from the group consisting of nitrogen, helium, argon and mixtures thereof, said inert gas being introduced in an amount of about 1 to 20 volumes, based on one volume in the heating chamber.

19. The method of Claim 16, 17 or 18, wherein any of the following conditions apply to the heating step:

(a) said mixture is heated to about 800 to about 1200°C;

(b) said mixture is heated to about 900 to 1050°C;

(c) said mixture is heated at a rate of about 2 to 100 degrees per minute;

(d) said mixture is heated at a rate of about 5 degrees per minute;

(e) the mixture is maintained at the selected elevated temperature for from 15 minutes to several hours;

(f) said purge gas is introduced during the heating of the reaction mixture, during the period the reaction mixture is maintained at the selected elevated temperature and during the cooling period;

(g) the mixture is maintained at the elevated temperature for about one hour;

(h) the phosphor is ground into fine particles;

(i) the ground particles are heated to a temperature below their melting temperature so that dislocations present in the crystal structure may be relieved.

20. A method for preparing a red or red-orange afterglow phosphor comprising: introducing a mixture comprised of an alkaline earth chalcogenide host; europium and thulium activators and a flux into a heating chamber; introducing an oxygen scavenger material into said heating chamber which may contain air; heating said mixture to a selected temperature above the melting point of the flux; and maintaining said mixture at about the selected elevated temperature for a pre-determined period to form a phosphor; and cooling said phosphor.

21. The method of Claim 20, wherein a purge gas is introduced into said heating chamber.

22. A composition comprising (a) a phosphor as claimed in any of Claims 1 to 14 or made by the method of any of Claims 16 to 21 and (b) any of the following

a solvent;

a resin or plastics material;

a green phosphor;

an organic fluorescent dye

23. A red or red-orange afterglow article comprising a substrate in or on which is a red or red-orange afterglow phosphor according to any of Claims 1 to 15 or made by the method of any of Claims 16 to 21.

24. The article of Claim 23 wherein, said substrate is of plastics.

25. The article of Claim 23, wherein said plastics is methyl methacrylate.

26. An afterglow phosphor composition comprising: a physical mixture of a phosphor comprised of zinc sulfide activated with copper and displaying a green phophorescence and a phosphor as claimed in any of Claims 1 to 15 or made by the method of any of Claims 16 to 21.

27. A method for decorating an article which comprises incorporating on or in all or a portion of the article a phosphor as claimed in any of Claims 1 to 15 or made by the method of any of Claims 16 to 21 to provide all or a portion of the article.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X,D | US-A-2 979 467 (S.P. KELLER)<br>* Whole document * | 1-3,6,7,10,13-16,19 | C 09 K 11/88<br>C 09 K 11/84 |

-----

TECHNICAL FIELDS
SEARCHED (Int. Cl.4)

C 09 K 11

The present search report has been drawn up for all claims

| Place of search | Date of completion of the search | Examiner |
|---|---|---|
| THE HAGUE | 01-08-1989 | DROUOT M.C. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0401)